Europäisches Patentamt

(19) European Patent Office

Office européen des brevets

(11) Numéro de publication : **0 281 428 B1**

# (12) FASCICULE DE BREVET EUROPEEN

(45) Date de publication du fascicule du brevet :
**13.03.91 Bulletin 91/11**

(51) Int. Cl.⁵ : **G01M 1/12**

(21) Numéro de dépôt : **88400005.0**

(22) Date de dépôt : **04.01.88**

(54) Procédé et dispositif pour déterminer le centre de gravité d'un aéronef.

(30) Priorité : **08.01.87 FR 8700116**

(43) Date de publication de la demande :
**07.09.88 Bulletin 88/36**

(45) Mention de la délivrance du brevet :
**13.03.91 Bulletin 91/11**

(84) Etats contractants désignés :
**DE ES GB IT NL SE**

(56) Documents cités :
**FR-A- 2 381 998**

(73) Titulaire : **AEROSPATIALE SOCIETE NATIONALE INDUSTRIELLE Société Anonyme dite:**
**37, Boulevard de Montmorency**
**F-75016 Paris (FR)**

(72) Inventeur : **Buisson, Dominique**
**25 Lotissement La Forêt Royale**
**F-31340 Villemur (FR)**
Inventeur : **Moline, Augustin**
**15, avenue St. Exupéry**
**F-31820 Pibrac (FR)**

(74) Mandataire : **Bonnetat, Christian et al**
**CABINET BONNETAT 23, Rue de Léningrad**
**F-75008 Paris (FR)**

## Description

La présente invention concerne un procédé et un système pour la détermination de la position longitudinale du centre de gravité d'un aéronef pourvu d'un empennage horizontal réglable, ainsi qu'une application à la surveillance dudit centre de gravité au voisinage du foyer de l'aéronef.

On connaît déjà des avions gros porteur, par exemple comme l'AIRBUS A 310-300, qui possèdent un empennage horizontal réglable dans lequel, afin d'augmenter le rayon d'action, on a disposé un réservoir de carburant supplémentaire. Généralement, dans ces avions, le centre de gravité est situé devant le point d'application de la portance (foyer) et la portance d'empennage est en réalité une déportance dirigée vers le bas. Il en résulte que la portance de la voilure doit être augmentée d'autant, ce qui entraîne un supplément de trainée. Pour améliorer les performances de l'avion en réduisant la trainée, il est nécessaire de reculer le plus possible le centre de gravité. En effet, plus le centre de gravité est reculé, moins le moment exercé par la déportance d'empennage par rapport au centre de gravité est grand et donc moins sont grands les suppléments de portance et de trainée.

Aussi, dans ces avions, le réservoir de carburant supplémentaire de l'empennage horizontal réglable est en liaison avec le réservoir de carburant principal aménagé dans la voilure et on prévoit un système de transfert de carburant à régulateur entre lesdits réservoirs supplémentaire et principal. Par suite, la quantité de carburant contenue dans le réservoir supplémentaire peut être régulée pour que le centre de gravité de l'avion soit longitudinalement le plus arrière possible, tout en restant dans une plage dans laquelle l'avion soit pilotable manuellement.

Si pour une raison quelconque, le système assurant la régulation dérivait, le centrage de l'avion pourrait devenir dangereux : trop arrière, l'avion serait instable, trop avant, l'avion deviendrait difficilement pilotable du fait des efforts trop importants qui seraient demandés aux pilotes.

Aussi, ledit régulateur commande le transfert du carburant du réservoir principal avant vers le réservoir supplémentaire arrière ou vice versa, de manière à réduire la marge statique, en plaçant et maintenant le centre de gravité de l'avion le plus arrière possible, tout en gardant une marge vis-à-vis du point où l'avion n'est plus pilotable. Dans la pratique, il est souhaitable de maintenir le centre de gravité au voisinage du foyer, et parfois entre le foyer et le point de manoeuvre, qui se trouve en arrière dudit foyer et qui est défini comme le point où la gouverne de profondeur a une efficacité infinie sur le facteur de charge de l'avion.

L'objet de la présente invention est un procédé de détermination fiable et précis de la position longitudinale du centre de gravité d'un aéronef au voisinage du foyer et, plus particulièrement un système de surveillance complètement indépendant du système de régulation de carburant, permettant une détection des pannes qui ne pourraient être vues par les surveillances dudit système de régulation, tout en permettant de multiplier les probabilités de détection de panne et d'assurer ainsi globalement la sécurité.

A cette fin, selon l'invention, le procédé pour la détermination de la position longitudinale du centre de gravité d'un aéronef pourvu d'un empennage horizontal réglable, est remarquable en ce que, à un point de vol pour lequel ledit aéronef est en équilibre avec sa gouverne de profondeur en prolongement aérodynamique dudit empennage horizontal réglable et lorsque ledit centre de gravité se trouve au voisinage de foyer dudit aéronef, on calcule ladite position du centre de gravité à partir :
- de la position du foyer dudit aéronef ;
- de la mesure du braquage dudit empennage horizontal réglable ;
- d'une première fonction du régime des moteurs de l'aéronef et du nombre de Mach, cette première fonction étant représentative de la valeur du braquage dudit empennage horizontal réglable, dans le cas où ledit centre de gravité se trouverait au foyer dudit aéronef ; et
- d'une seconde fonction dudit nombre de Mach, cette seconde fonction étant représentative de l'écart de braquage dudit empennage horizontal pour un écart de 1% de la position du centre de gravité.

Comme on le verra plus en détail ci-après, la présente invention met profit le fait que le braquage de l'empennage horizontal réglable, lorsque l'avion est trimmé, c'est-à-dire lorsque l'équilibre en moment de tangage est réalisé et que la gouverne de profondeur présente une incidence nulle par rapport audit empennage, est une fonction des conditions de vol et de la position du centre de gravité de l'avion. La présente invention exploite de manière particulière les lois de la mécanique du vol, et notamment l'équation du moment de tangage de l'aéronef autour du centre de gravité de celui-ci.

Ainsi, dans le procédé conforme à l'invention, on détermine la position longitudinale du centre de gravité de l'aéronef, au voisinage du foyer, uniquement à partir d'une donnée structurelle de l'aéronef (position du foyer), à partir de données (nombre de Mach et régime des moteurs) mesurées en vol et d'ailleurs déjà traitées ou élaborées par les systèmes de l'aéronef pour d'autres fins et donc déjà disponibles, et à partir de la mesure du braquage de l'empennage horizontal réglable.

Comme cela sera démontré ci-après, le procédé de l'invention met avantageusement en oeuvre l'équation

suivante :

$$x_G = x_F + \frac{iH - K(M,N1)}{H(M)}$$

dans laquelle :

– $x_G$ est l'abscisse de la position effective du centre de gravité G, mesurée le long de l'axe longitudinal de l'aéronef à partir d'une origine de référence et rapportée à la corde aérodynamique moyenne (généralement désignée par MAC) de la voilure principale dudit aéronef ;

– $x_F$ est l'abscisse de la position du centre de gravité G pour laquelle le coefficient de portance de l'aéronef n'a pas d'influence sur le braquage d'équilibre de l'empennage horizontal réglable, c'est-à-dire la position pour laquelle ledit centre de gravité se trouve au foyer de l'aéronef complet, cette abscisse étant mesurée le long de l'axe longitudinal de l'aéronef à partir de ladite origine de référence et étant également rapportée à ladite corde aérodynamique moyenne ;

– iH est la mesure, au point de vol considéré, du braquage réel de l'empennage horizontal réglable pour l'aéronef trimmé ;

– K(M, N1) est la première fonction du régime N1 des moteurs de l'aéronef et du nombre de Mach M au point de vol considéré ; et

– H(M) est la seconde fonction du nombre de Mach audit point de vol.

La fonction K(M, N1) est liée à la géométrie de l'aéronef et à celle de ses moteurs. Elle peut se présenter sous la forme d'une table à deux entrées – l'entrée du paramètre M et l'entrée du paramètre N1 – et à une sortie donnant la valeur de la fonction pour des couples de valeurs particulières desdits paramètres d'entrée. Ladite fonction peut être déterminée soit par le calcul, soit à partir d'essais en vol et/ou en soufflerie.

La fonction K(M, N1), qui, comme on l'a indiqué ci-dessus, est représentative de la valeur du braquage dudit empennage horizontal réglable dans le cas où le centre de gravité se trouverait au foyer, peut avantageusement se présenter sous la combinaison de trois fonctions, d'une seule variable chacune, par exemple du type :

$$K(M, N1) = F(M) + G1(N1) \cdot G2(M)$$

dans lequel :

– F(M) est une fonction du seul nombre de Mach M, représentative de l'aérodynamique de l'aéronef ;

– G1(N1) est une fonction du seul régime moteur N1, et

– G2(M) est une fonction du seul nombre de Mach M, représentative du moment de tangage dû à la poussée des moteurs.

Ainsi, dans la composition de la fonction K(M, N1), on dissocie l'influence de la géométrie de l'aéronef de l'influence globale de ses moteurs.

Pour connaître la valeur de ladite fonction au point de vol considéré, il est nécessaire de connaître la valeur correspondante de chacun des deux paramètres que sont le nombre de Mach M et le régime des moteurs N1.

Le nombre de Mach peut par exemple être fourni par le calculateur de bord ADC (Air Data Computer), tandis que le régime des moteurs est directement délivré par le dispositif de contrôle associé à ceux-ci.

Le procédé conforme à l'invention permet donc de calculer la position du centre de gravité de l'aéronef en vol indépendamment de mesures faites au sol et uniquement à partir de paramètres déjà élaborés, à l'exception de la mesure de braquage de l'empennage horizontal réglable qui nécessite un système classique de mesure d'angle.

Un système mettant en oeuvre ce procédé peut ainsi fournir une indication de la position du centre de gravité, qui peut être présentée directement sous forme visuelle, par exemple sur des tubes cathodiques, ou être utilisée dans des calculateurs, soit pour l'élaboration de fonctions particulières où la prise en compte du centrage est nécessaire, soit pour la vérification de fonctions élaborées par des voies différentes.

Un tel système peut en particulier être utilisé pour vérifier des résultats obtenus par une autre méthode ou, comme cela sera décrit ci-après, détecter une position limite, extrême, et déclencher le système d'alarme.

Aussi, selon la présente invention, un système pour la détermination de la position longitudinale du centre de gravité d'un aéronef pourvu d'un empennage horizontal réglable selon le procédé défini ci-dessus, est remarquable :

– en ce qu'il comporte :

- un calculateur ;
- un capteur de position angulaire associé audit empennage horizontal réglable ;
- un premier dispositif suceptible de délivrer des informations représentatives du régime des moteurs de l'aéronef ;
- un second dispositif susceptible de délivrer des informations représentatives du nombre de Mach ;
- des moyens de mémoire dans lesquels sont emmagasinées lesdites fonctions, lesdits moyens de mémoire recevant les informations délivrées par lesdits premier et second dispositifs et délivrant à leur sortie les valeurs correspondantes desdites fonctions ;
- et en ce que ledit calculateur reçoit des informations sur la position du foyer de l'aéronef en plus des informations délivrées par lesdits moyens de mémoire, ainsi que de celles délivrées par ledit capteur de position angulaire.

Une application intéressante du procédé selon l'invention consiste à surveiller la position longitudinale du centre de gravité d'un aéronef pourvu d'un empennage horizontal réglable, ladite surveillance s'effectuant par rapport à au moins une position limite dudit centre de gravité, choisie au voisinage du foyer dudit aéronef.

Selon cette application conforme à l'invention, à un point de vol pour lequel ledit aéronef est en équilibre avec sa gouverne de profondeur en prolongement aérodynamique dudit empennage horizontal réglable :

- on mesure le braquage dudit empennage horizontal réglable ;
- on détermine la valeur d'une fonction k(M, N1) du régime (N1) des moteurs de l'aéronef et du nombre de Mach (M), cette fonction étant représentative de la valeur du braquage dudit empennage horizontal réglable, dans le cas où ledit centre de gravité se trouverait dans ladite position limite voisine dudit foyer;
- on compare ledit braquage mesuré et la valeur de ladite fonction k(M, N1) ; et
- on déduit de la comparaison, si le centre de gravité se trouve en avant ou en arrière de ladite position limite.

De façon analogue à ce qui a été dit à propos de la fonction K(M, N1), la fonction k(M, N1) est liée à la géométrie de l'aéronef et de ses moteurs. Elle peut se présenter sous la forme d'une table à deux entrées – l'entrée du paramètre M et l'entrée du paramètre N1 – et à une sortie donnant la valeur de la fonction pour des couples de valeurs particulières desdits paramètres d'entrée. Ladite fonction peut être déterminée soit par le calcul, soit à partir d'essais en vol et/ou en soufflerie.

La fonction k(M, N1) peut également de façon avantageuse se présenter sous la combinaison de trois fonctions, d'une seule variable chacune, par exemple du type :

$$k(M, N1) = f(M) + G1(N1) \cdot G2(M)$$

dans lequel :

- f(M) est une fonction du seul nombre de Mach M, représentative de l'aérodynamique de l'aéronef ;
- G1(N1) est une fonction du seul régime moteur N1, et
- G2(M) est une fonction du seul nombre de Mach M, représentative du moment de tangage dû à la poussée des moteurs.

Ainsi, dans la composition de la fonction k(M, N1), on dissocie également l'influence de la géométrie de l'aéronef de l'influence globale de ses moteurs.

L'expérience a montré, et le calcul confirme, que les fonctions G1(N1) et G2(M) pouvaient être les mêmes pour les fonctions K(M, N1) et k(M, N1).

Ainsi, comme précédemment, pour connaître la valeur de ladite fonction k(M, N1) au point de vol considéré, il suffit de connaître la valeur correspondante de chacun des deux paramètres que sont le nombre de Mach M et le régime des moteurs N1.

Dans une forme de mise en oeuvre avantageuse du procédé de surveillance selon l'invention, on détermine les valeurs respectives d'au moins deux fonctions k(M, N1) et k'(M, N1), ces fonctions étant respectivement représentatives des valeurs du braquage dudit empennage horizontal réglable, dans le cas où ledit centre de gravité se trouverait dans des positions limites distinctes, mais voisines dudit foyer, on compare le braquage mesuré à chacune desdites valeurs de fonction et on déduit de ces comparaisons la position relative dudit centre de gravité par rapport auxdites positions limites.

Pour mettre en oeuvre le procédé conforme à l'invention pour la surveillance de la position longitudinale du centre de gravité d'un aéronef pourvu d'un empennage horizontal réglable, on prévoit un système comportant :

- un capteur de position angulaire associé audit empennage horizontal réglable ;
- un premier dispositif susceptible de délivrer des informations représentatives du régime des moteurs de l'aéronef ;
- un second dispositif susceptible de délivrer des informations représentatives du nombre de Mach ;

– des moyens de mémoire dans lesquels est emmagasinée au moins une fonction k(M, N1), lesdits moyens de mémoire recevant les informations délivrées par lesdits premier et second dispositifs et délivrant à leur sortie les valeurs correspondantes de ladite fonction ;

– un comparateur susceptible de comparer les informations délivrées par ledit capteur de position (9) et les informations délivrées par lesdits moyens de mémoire ; et

– un dispositif d'alarme déclenché par ledit comparateur.

Dans le cas où ledits moyens de mémoire sont susceptibles de délivrer plusieurs fonctions k(M, N1), on prévoit autant de comparateurs que de fonctions.

Les figures du dessin annexé feront bien comprendre comment l'invention peut être réalisée. Sur ces figures, des références identiques désignent des éléments semblables.

La figure 1 représente schématiquement un avion gros porteur et le système des forces intervenant dans l'équilibre en moment de tangage.

La figure 2 donne le schéma synoptique d'un mode de réalisation d'un système selon l'invention.

Les figures 3, 4 et 5 indiquent les composantes de ladite fonction K(M, N1).

La figure 6 donne un exemple de la fonction H(M).

La figure 7 est un diagramme montrant des composantes des fonctions K(M, N1) et k(M, N1).

La figure 8 montre le schéma synoptique d'un mode de réalisation du système de surveillance de la position du centre de gravité, conforme à l'invention.

La figure 9 montre une variante de réalisation dudit système de surveillance.

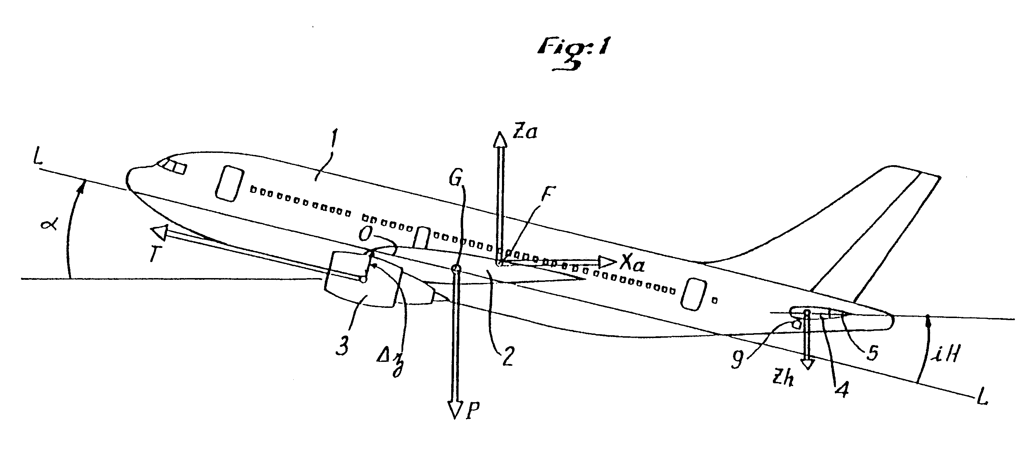

L'avion gros porteur 1, représenté sur la figure 1, présente un axe longitudinal L-L et comporte une voilure principale 2 supportant des moteurs 3 et un empennage horizontal réglable 4, souvent appelé plan horizontal réglable et désigné par l'abréviation PHR. Lorsque cet avion n'est soumis à aucun mouvement de roulis ou de giration, il subit essentiellement l'action des forces suivantes :

– son poids P, appliqué au centre de gravité G et bien entendu dirigé vers le bas ;

– la portance aérodynamique Za, de l'avion complet, appliquée au foyer F et dirigée vers le haut ;

– la trainée aérodynamique Xa, de l'avion complet, appliquée au foyer F et dirigée vers l'arrière ;

– la poussée T des moteurs 3 parallèle à l'axe L-L, dirigée vers l'avant et appliquée en un point dont la distance audit axe L-L est égale à $\Delta z$ ; et

– la déportance aérodynamique Zh, dirigée vers le bas, de l'empennage horizontal réglable 4, braqué d'un angle iH par rapport à l'axe L-L.

Le poids P étant appliqué au centre de gravité G, son moment par rapport à ce dernier est nul. Par ailleurs, la distance séparant le foyer F de l'axe L-L étant généralement très faible (au point de considérer que ledit foyer F se trouve sur l'axe L-L), le bras de levier de la trainée aérodynamique Xa par rapport au centre de gravité G est nul, de sorte que le moment de ladite trainée aérodynamique Xa par rapport au centre de gravité G est également nul.

Par suite, on peut considérer avec une bonne approximation que le moment de tangage résultant autour du centre de gravité G comporte les composantes suivantes :

– un moment M1, engendré par la poussée T des moteurs 3 et égal au produit $T \cdot \Delta z$ ;

– un moment M2, engendré par la portance aérodynamique Za ; et

– un moment M3, engendré par la déportance aérodynamique Zh.

A ces trois composantes, doit en être ajoutée une quatrième M4, correspondant au tangage aérodynamique pour une portance nulle et un braquage iH de l'empennage 4 également nul. On définit à cet effet un coefficient de moment de tangage aérodynamique pour une portance nulle et un braquage iH nul, ce coefficient étant désigné par Cmo.

Si l'on désigne par S la surface de référence de la voilure, par $\underline{l}$ la corde de référence (ou corde aérodynamique moyenne) de la voilure et par Pd la pression dynamique au point de vol considéré, le moment M4 est égal au produit $S \cdot Pd \cdot \underline{l} \cdot Cmo$. On remarquera que si, comme cela est usuel, on choisit sur l'axe L-L une origine 0 et que l'on exprime les abscisses $x_G$ et $x_F$ des points G et F (celui-ci étant supposé sur l'axe L-L) en % de ladite corde de référence l, le moment M2 est égal au produit $Za \, (x_G - x_F) \cdot \underline{1}$.

Par ailleurs, si on appelle Zαh le gradient de déportance de l'empennage horizontal 4 correspondant à l'incidence locale de l'empennage 4, le moment M3 est égal au produit $Z\alpha h \cdot iH \cdot l$.

Lorsque l'avion 1 est trimmé, c'est-à-dire lorsque l'équilibre en moment de tangage est réalisé et que la gouverne de profondeur 5, portée par le bord de fuite de l'empennage 4, est en prolongement aérodynamique dudit empennage (braquage nul), l'équilibre en moment de tangage s'écrit :

(1) $M1 + M2 + M3 + M4 = \underline{0}$

En remplaçant, dans cette équation (1), les différents moments M1, M2, M3 et M4 par les valeurs indiquées ci-dessus, on obtient donc :

(2) $T \cdot \Delta z + Za \cdot (x_G - x_F) \cdot l + Z\alpha h \cdot iH \cdot l + S \cdot Pd \cdot l/Cmo = \underline{0}$

On remarquera que si on appelle Cz le coefficient de portance de l'avion complet et Czαh le coefficient du gradient de déportance de l'empennage 4, on peut écrire :
(3) Za = − S · Pd · Cz et
(4) αh = S · Pd · Czαh
Par suite, l'équation (2) peut s'écrire :

$$(5) \quad T.\Delta z + S.Pd.l \left[ - Cz(x_G - x_F) + Cz\alpha h.iH + Cmo \right] = 0$$

Si on appelle iHRef la valeur particulière du braquage iH correspondant à l'équilibre lorsque les points G et F sont confondus, on obtient :

$$(6) \quad T.\Delta z + S.Pd.l \left[ Cz\alpha h.iH \, Ref + Cmo \right] = 0$$

Des équations (5) et (6), on peut en déduire :

$$(7) \quad x_G - x_F = \frac{iH - iHRef}{\frac{Cz}{Cz\alpha h}}$$

On remarquera que le rapport $\frac{Cz}{Cz\alpha f}$ correspond à la valeur de l'écart de braquage iH - iH Ref pour laquelle $x_G - x_F = 1\%$.

Par ailleurs, lorsque le centre de gravité G est au voisinage du foyer F, le terme $x_G - x_F$ est faible et les effets de Cz peuvent être approximés en fonction d'une valeur moyenne de Cz. On peut donc alors admettre que la fonction $\frac{Cz}{Cz\alpha f}$ est une valeur H(M) indépendante de Cz, mais pouvant varier avec le nombre de Mach M.

On peut alors écrire :

$$(8) \quad x_G - x_F = \frac{iH - iHRef}{H(M)}$$

Dans ce cas, l'écart de position du centre de gravité par rapport au foyer peut être ainsi représenté par une valeur proportionnelle à l'écart de l'angle de braquage de l'empennage 4 par rapport à la valeur de référence iHRef.

De plus, de l'équation (6), on voit que IHRef dépend de T, c'est-à-dire du régime N1 des moteurs, et de Czαh et de Cmo, c'est-à-dire du nombre de Mach M. Le paramètre iHRef peut donc être considéré comme une fonction dépendant des paramètres N1 et M. Une telle fonction peut par exemple s'écrire sous la forme :
(9) iHRef = F(M) + G1(N1) · G2(M)

dans laquelle F(M) représente $\frac{Cmo}{Cz\alpha h}$,

et G1(N1) · G2(M) représente

$$e \, \frac{T.\Delta z}{S.Pd.l.Cz\alpha h}$$

6

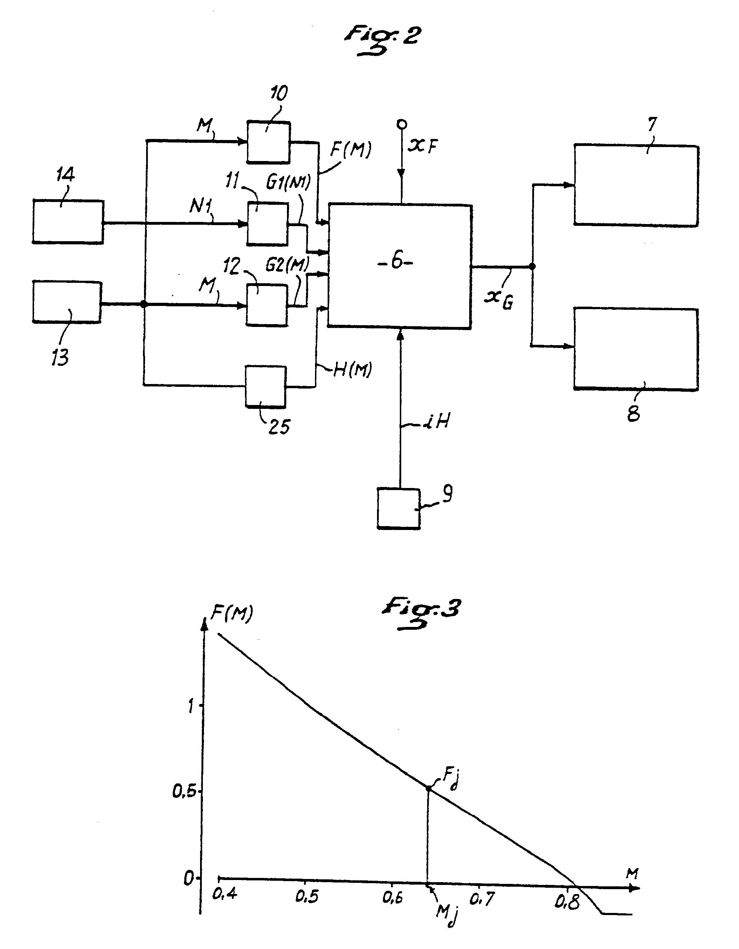

Pour la mise en oeuvre de la présente invention, on prévoit un système, qui est embarqué à bord de l'avion 1 et dont le schéma synoptique est donné par la figure 2. Ce système comporte un calculateur 6 susceptible d'adresser la position instantanée du centre de gravité G, c'est-à-dire la grandeur calculée $x_G$ définie ci-dessus, à un ou plusieurs afficheurs 7 et/ou à un ou plusieurs utilisateurs 8, tels que par exemple des calculateurs de commande de vol.

Le calculateur 6 reçoit, ou bien a en mémoire, la grandeur $x_F$ qui est une caractéristique de construction de l'avion 1 et qui, comme mentionné ci-dessus, définit la position du foyer F. De plus, un capteur 9 (voir également la figure 1), par exemple du type synchrotransmetteur, détecte la position angulaire de l'empennage réglable 4 et adresse la valeur iH audit calculateur 6.

Audit calculateur 6 sont associées des mémoires 10, 11, 12 et 25 contenant les différentes fonctions utiles au calcul de la grandeur $x_G$. Les mémoires 10, 12 et 25 reçoivent d'un Machmètre ou d'un calculateur ADC 13 la valeur M du nombre de Mach. De plus, la mémoire 11 reçoit d'un capteur ou d'un calculateur 14 associé aux moteurs 3 la valeur du régime N1.

Dans les mémoires 10, 11 et 12 sont respectivement contenues les fonctions F(M), G1(N1) et G2(M), qui sont transmises au calculateur 6. Ainsi, celui-ci peut calculer iHRef par l'équation (9). Dans la mémoire 25 est contenue la fonction H(M). Le calculateur 6 peut donc calculer $x_G$ par l'équation (8).

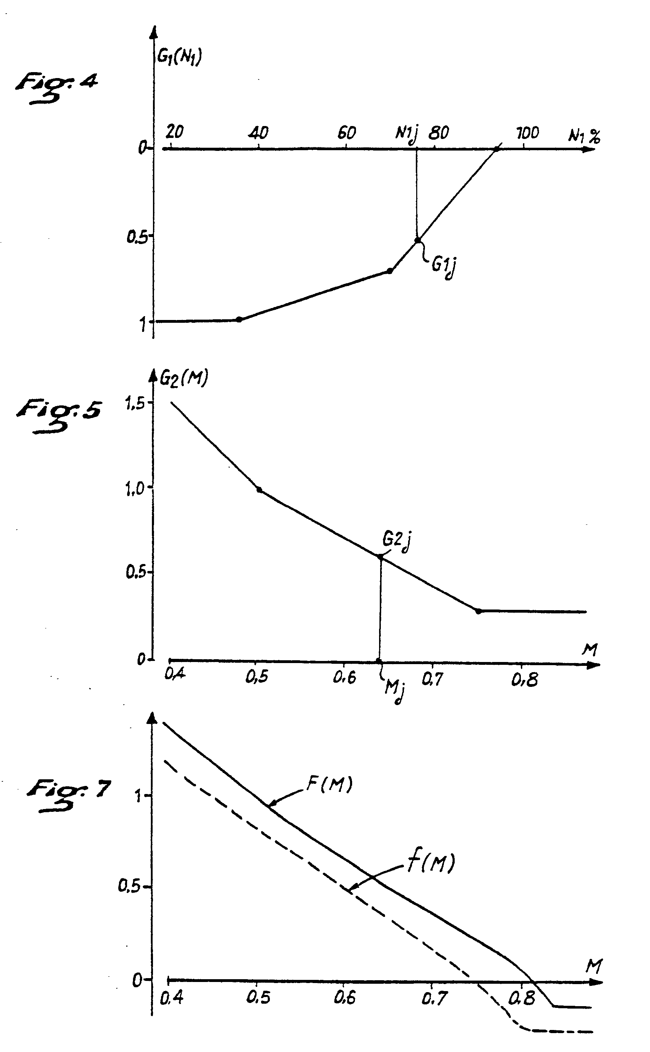

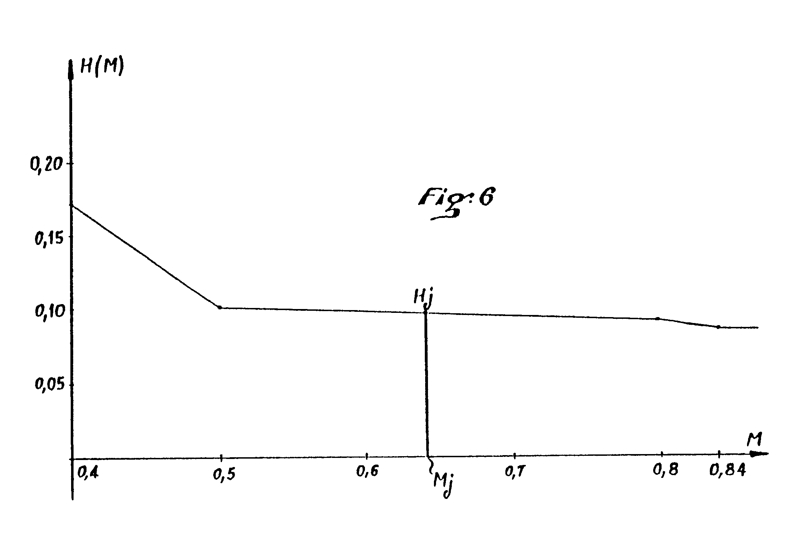

Sur les figures 3, 4, 5 et 6, on a représenté respectivement des exemples de fonctions F(M), G1(N1), G2(M) et H(M) relatives à un avion AIRBUS, type A310. Les fonctions F(M) et G2(M) sont exprimées en degrés d'angle, tandis que la fonction G1(N1), est un nombre sans dimension. La fonction H(M) est exprimée en degrés par pour-cent. On peut voir qu'à toute valeur courante Mj (ou au moins à une pluralité de telles valeurs courantes) du nombre de Mach M correspond une valeur particulière Fj, une valeur particulière G2j et une valeur particulière Hj respectivement des fonctions F(M), G2(M) et H(M) et qu'à toute valeur courante N1j (ou au moins à une pluralité de telles valeurs courantes) du régime moteur N1 correspond une valeur particulière G1j de la fonction G1(N1). Ainsi, pour une pluralité de couples de valeurs Mj, N1j, on obtient les valeurs correspondantes de la fonction iHRef qui sont transmises au calculateur 6.

Les fonctions F(M), G1(N1) et G2(M) sont caractéristiques de la géométrie de l'avion 1 et de ses moteurs 3. Elles peuvent être établies par calcul théorique ou bien encore par des mesures.

Dans le cas où l'on désire définir pour le centre de gravité G une position limite, par exemple en vue d'une alarme, la formule (8) mentionnée ci-dessus montre que l'abscisse $x_G$ lim de cette position limite est donnée par :

$$(9) \quad x_G \text{ lim} - x_F = \frac{i\text{Hlim} - i\text{HRef}}{H(M)},$$

iHlim étant la valeur de iH correspondant à $x_G$ lim.

Puisque $x_G$, et donc à fortiori $x_G$ lim, sont proches de $x_F$, on en déduit que iHlim est également proche de iHRef. Par ailleurs, puisque iHRef est, comme on l'a montré ci-dessus, une fonction K(M, N1) des deux paramètres M et N1, on peut avec une bonne approximation considérer que iHlim est également une fonction k(M, N1) de ces deux paramètres, les deux fonctions K(M, N1) et k(M, N1) étant de forme identique et proches l'une de l'autre.

Par exemple, dans le cas mentionné ci-dessus où K(M, N1) est égale à iHRef = F(M) + G1(N1) · G2(M), k(M, N1) peut être égale à f(M) + G1(N1) · G2(M). Dans cet exemple particulier, G1(N1) et G2(M) sont des fonctions identiques dans K(M, N1) et dans k(M, N1), alors que f(M) est une fonction de même forme que F(M), mais différente de celle-ci. Sur la figure 7, on a représenté une telle fonction f(M) sur un diagramme semblable à celui de la figure 3 montrant la fonction F(M). Sur cette figure, on a supposé que, pour toutes valeurs de M, la fonction F(M) était supérieure à la fonction f(M), c'est-à-dire que la fonction iHRef était supérieure à iHlim et donc que le centre de gravité G se trouvait légèrement en arrière du foyer F. Bien entendu, on aurait pu supposer l'inverse, afin qu'une alarme puisse être donnée avant que le centre de gravité n'atteigne, en reculant, ledit foyer F. De même, il va de soi que la position limite pour le centre de gravité G pourrait être choisie au foyer F ; dans ce cas, iHlim serait confondu avec iHRef.

En soustrayant membre à membre l'équation (9) de l'équation (8), on obtient :

$$(10) \quad x_G - x_G \text{ lim} = \frac{iH - iHlim}{H(M)}$$

Il résulte de cette dernière équation que, à chaque instant, l'écart entre la position réelle du centre de gravité G et une position limite choisie arbitrairement, mais proche du foyer, peut être déterminé en comparant la valeur instantanée mesurée de iH à la valeur iHlim correspondant à $x_G$lim.

Sur la figure 8, on a représenté le schéma synoptique d'un système, conforme à l'invention, permettant la surveillance de cet écart. Ce système comporte :

– une mémoire 15, dans laquelle est emmagasinée la fonction f(M) et recevant à son entrée la valeur M du nombre de Mach délivrée par le Machmètre ou calculateur ADC13 ;

– une mémoire 16, dans laquelle est emmagasinée la fonction G1(N1) et recevant à son entrée la valeur N1 du régime du moteur 3, en provenance du détecteur 14 ;

– une mémoire 17, dans laquelle est emmagasinée la fonction G2(M) et recevant à son entrée la valeur M du nombre de Mach délivrée par le dispositif 13 ;

– un calculateur 18, recevant les trois fonctions f(M), G1(N1) et G2(M) respectivement des mémoires 15, 16 et 17 et délivrant à sa sortie la fonction $k(M, N1) = iHlim = f(M) + G1(N1) \cdot G2(M)$ ;

– le capteur 9 engendrant le signal iH ;

– un comparateur 19 susceptible de comparer le signal mesuré iH à la valeur iHlim et de délivrer un signal à sa sortie lorsque iH est supérieur à iHlim ; et

– un dispositif d'alarme 20 déclenché par ledit signal engendré par le comparateur 19.

Il peut être intéressant de prévoir deux valeurs limites iHlim et iHlim' au lieu d'une seule valeur limite iHlim. Il en est par exemple ainsi si l'on désire engendrer une alarme graduée en fonction de l'importance du recul vers l'arrière du centre de gravité G. Par exemple, dans un avion dans lequel le foyer F et le point de manoeuvre se trouvent respectivement à des abscisses de 40% et de 45% et dans lequel le régulateur de centrage doit maintenir l'abscisse $x_G$ à environ 39%, il est intéressant de prévoir deux alarmes correspondant respectivement aux abscisses limites $x_G$ lim = 41% et $x_G$ lim' = 43%. Ainsi la limite de 41% peut correspondre à l'erreur maximale admise lors du calcul du centre de gravité effectué par l'équipage avant le vol et ne nécessiter qu'un transfert partiel de carburant de l'arrière vers l'avant. En revanche, la limite de 43% peut correspondre à une panne non détectée du système de régulation de centrage et le franchissement de cette limite devrait avoir pour effet de commander un transfert total de carburant des réservoirs arrière vers le réservoir avant, ou l'interruption du transfert du réservoir avant vers le réservoir arrière.

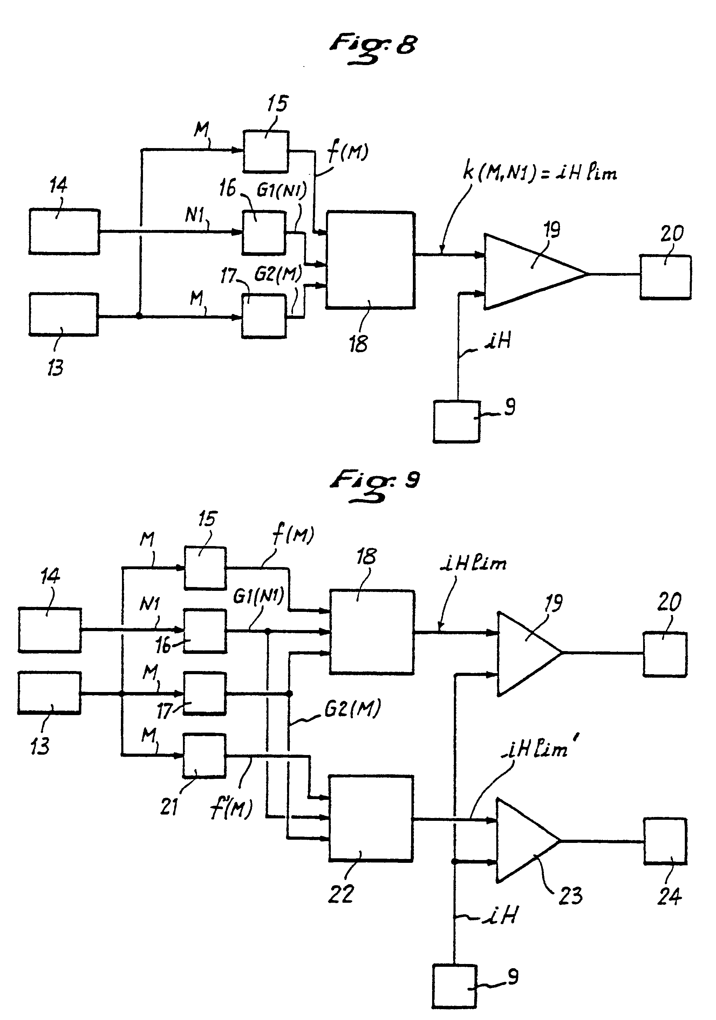

Le schéma synoptique d'un exemple de réalisation d'un système d'alarme à deux seuils est illustré sur la figure 9. On y retrouve l'agencement 9 et 13 à 20 du dispositif de la figure 8. Le système comporte de plus :

– une mémoire 21, dans laquelle est emmagasinée une fonction f'(M) différente de f(M), ladite mémoire recevant la valeur M du nombre de Mach délivrée par le dispositif 13 ;

– un calculateur 22 recevant les fonctions f'(M), G1(N1) et G2(M), respectivement des mémoires 21, 16 et 17 et délivrant à sa sortie une valeur limite iHlim', différente de iHlim ;

– un comparateur 23, susceptible de comparer la valeur mesurée iH délivrée par le capteur 9 et la valeur iHlim' ; et

– un dispositif d'alarme 24, déclenché par le comparateur 23 lorsque iH est supérieur à iHlim'.

## Revendications

1. Procédé pour la détermination de la position longitudinale du centre de gravité (G) d'un aéronef (1) pourvu d'un empennage horizontal réglable (4),

caractérisé en ce que, à un point de vol pour lequel ledit aéronef (1) est en équilibre avec sa gouverne de profondeur (5) en prolongement aérodynamique dudit empennage horizontal réglable (4) et lorsque ledit centre de gravité se trouve au voisinage du foyer dudit aéronef, on calcule ladite position du centre de gravité à partir:

– de la position ($x_F$) du foyer (F) dudit aéronef (1) ;

– de la mesure du braquage (iH) dudit empennage horizontal réglable (4) ;

– d'une première fonction K(M, N1) du régime (N1) des moteurs (3) de l'aéronef et du nombre de Mach (M), cette première fonction étant représentative de la valeur du braquage (iHRef) dudit empennage horizontal réglable (4), dans le cas où ledit centre de gravité (G) se trouverait au foyer (F) dudit aéronef ; et

– d'une seconde fonction H(M) dudit nombre de Mach, cette seconde fonction étant représentative de l'écart de braquage dudit empennage horizontal pour un écart de 1% de la position du centre de gravité.

2. Procédé selon la revendication 1,

caractérisé en ce qu'il met en oeuvre l'équation suivante :

$$x_G = x_F + \frac{iH - K(M.N1)}{H(M)}$$

dans laquelle :

– $x_G$ est l'abscisse de la position effective du centre de gravité G, mesurée le long de l'axe longitudinal (L-L) de l'aéronef à partir d'une origine de référence (0) et rapportée à la corde aérodynamique moyenne de la voilure principale dudit aéronef ;

– $x_F$ est l'abscisse de la position du centre de gravité G pour laquelle le coefficient de portance de l'aéronef n'a pas d'influence sur le braquage d'équilibre de l'empennage horizontal réglable, c'est-à-dire la position pour laquelle ledit centre de gravité se trouve au foyer de l'aéronef complet, cette abscisse étant mesurée le long de l'axe longitudinal (L-L) de l'aéronef à partir de ladite origine de référence (0) et étant également rapportée à ladite corde aérodynamique moyenne ;

– iH est la mesure, au point de vol considéré, du braquage réel de l'empennage horizontal réglable (4) pour l'aéronef trimmé ;

– K(M, N1) est la première fonction du régime N1 des moteurs (3) l'aéronef et du nombre de Mach M au point de vol considéré ; et

– H(M) est la seconde fonction du nombre de Mach audit point de vol.

3. Procédé selon la revendication 2,

caractérisé en ce que ladite fonction K(M, N1) est une combinaison de fonctions d'une seule variable chacune.

4. Procédé selon la revendication 3,

caractérisé en ce que ladite combinaison de fonctions permet de séparer les influences respectives du nombre de Mach sur l'aéronef et sur les moteurs.

5. Système pour la détermination de la position longitudinale du centre de gravité d'un aéronef (1) pourvu d'un empennage horizontal réglable (4), conformément au procédé de l'une ou l'autre des revendications 1 ou 2,

caractérisé :

– en ce qu'il comporte :

• un calculateur (6) ;

• un capteur de position angulaire (9) associé audit empennage horizontal réglable (4) ;

• un premier dispositif (14) susceptible de délivrer des informations représentatives du régime des moteurs de l'aéronef ;

• un second dispositif (13) susceptible de délivrer des informations représentatives du nombre de Mach;

• des moyens de mémoire (10, 11, 12, 25) dans lesquels sont emmagasinées lesdites fonctions, lesdits moyens de mémoire recevant les informations délivrées par lesdits premier et second dispositifs (14, 13) et délivrant à leur sortie les valeurs correspondantes desdites fonctions ;

– et en ce que ledit calculateur (6) reçoit des informations sur la position du foyer de l'aéronef, en plus des informations délivrées par lesdits moyens de mémoire (10 à 12), ainsi que de celles délivrées par ledit capteur de position angulaire (9).

6. Application du procédé selon l'une des revendications 1 ou 2 à la surveillance de la position longitudinale du centre de gravité (G) d'un aéronef (1) pourvu d'un empennage horizontal réglable (4), ladite surveillance s'effectuant par rapport à au moins une position limite dudit centre de gravité choisie au voisinage du foyer dudit aéronef,

caractérisé en ce que, à un point de vol pour lequel ledit aéronef (1) est en équilibre avec sa gouverne de profondeur (5) en prolongement aérodynamique dudit empennage horizontal réglable (4) :

– on mesure le braquage (iH) dudit empennage horizontal réglable (4) ;

– on détermine la valeur d'une fonction k(M, N1) du régime (N1) des moteurs (3) de l'aéronef et du nombre de Mach (M), cette fonction étant représentative de la valeur du braquage (iHlim) dudit empennage horizontal réglable (4), dans le cas où ledit centre de gravité (G) se trouverait dans ladite position limite voisine dudit foyer ;

– on compare ledit braquage mesuré (iH) et la valeur de ladite fonction k(M, N1) ; et

– on déduit de la comparaison, si ledit centre de gravité se trouve en avant ou en arrière de ladite position limite.

7. Procédé selon la revendication 6,

caractérisé en ce que ladite fonction k(M, N1) est une combinaison de fonctions d'une seule variable chacune.

8. Procédé selon l'une des revendications 6 ou 7,

caractérisé en ce que on détermine les valeurs respectives d'au moins deux fonctions k(M, N1) et k'(M, N1), ces fonctions étant respectivement représentatives des valeurs du braquage dudit empennage horizontal réglable, dans le cas où ledit centre de gravité se trouverait dans des positions limites distinctes, mais voisines dudit foyer, on compare le braquage mesuré à chacune desdites valeurs de fonction et on déduit de ces comparaisons la position relative dudit centre de gravité par rapport auxdites positions limites.

9. Système pour la mise en oeuvre du procédé de l'une quelconque des revendications 6 à 8, caractérisé en ce qu'il comporte :

– un capteur de position angulaire (9) associé audit empennage horizontal réglable (4) ;

– un premier dispositif (14) susceptible de délivrer des informations représentatives du régime des moteurs (3) de l'aéronef ;

– un second dispositif (13) susceptible de délivrer des informations représentatives du nombre de Mach ;

– des moyens de mémoire (15 à 18) dans lesquels est emmagasinée au moins une fonction k(M, N1), lesdits moyens de mémoire recevant les informations délivrées par lesdits premier et second dispositifs et délivrant à leur sortie les valeurs correspondantes de ladite fonction ;

– un comparateur (19) susceptible de comparer les informations délivrées par ledit capteur de position (9) et les informations délivrées par lesdits moyens de mémoire (15-18) ; et

– un dispositif d'alarme (20) déclenché par ledit comparateur.

10. Système selon la revendication 9,

caractérisé en ce que lesdits moyens de mémoire délivrent plusieurs fonctions k(M, N1) et en ce que sont prévus autant de comparateurs (19, 23) que de fonctions.

## Claims

1. Process for determining the longitudinal position of the centre of gravity (G) of an aircraft (1) provided with an adjustable horizontal stabilizer (4), characterized in that, at a point of flight for which said aircraft (1) is in equilibrium with its elevator (5) in aerodynamic extension of said adjustable horizontal stabilizer (4) and when said centre of gravity lies near the focus of said aircraft, said position of the centre of gravity is calculated from:

– the position ($x_F$) of the focus (F) of said aircraft (1) ;

– the measurement of the deflection (iH) of said adjustable horizontal stabilizer (4) ;

– a first function K(M, N1) of the speed (N1) of the aircraft engines (3) and of the Mach number (M), this first function being representative of the value of deflection (iHRef) of said adjustable horizontal stabilizer (4), in the case of said centre of gravity (G) being located at the focus (F) of said aircraft ; and

– a second function H(M) of said Mach number, this second function being representative of the deviation of deflection of said horizontal stabilizer for a deviation of 1% from the position of the centre of gravity.

2. Process according to Claim 1, characterized in that it employs the following equation :

$$x_G = x_F + \frac{iH - K(M,N1)}{H(M)}$$

in which :

– $x_G$ is the abscissa of the effective position of the centre of gravity G, measured along the longitudinal axis (L-L) of the aircraft from a reference origin (0) and referred to the mean aerodynamic chord of the principal wing unit of said aircraft ;

– $x_F$ is the abscissa of the position of the centre of gravity G for which the coefficient of lift of the aircraft has no influence on the deflection of equilibrium of the adjustable horizontal stabilizer, i.e. the position for which said centre of gravity lies at the focus of the complete aircraft, this abscissa being measured along the longitudinal axis (L-L) of the aircraft from said reference origin (0) and also being referred to said mean aerodynamic chord ;

– iH is the measurement, at the point of flight in question, of the real deflection of the adjustable horizontal stabilizer (4) for the trimmed aircraft ;

– K(M, N1) is the first function of the speed N1 of the aircraft engines (3) and of the Mach number M at the point of flight in question ; and

– H(M) is the second function of the Mach number at said point of flight.

3. Process according to claim 2, characterized in that said function K(M, N1) is a combination of functions each of one sole variable.

4. Process according to claim 3, characterized in that said combination of functions makes it possible to separate the respective influences of the Mach number on the aircraft and on the engines.

5. System for determining the longitudinal position of the centre of gravity of an aircraft (1) provided with an adjustable horizontal stabilizer (4) according to the process of one or the other of claims 1 or 2, characterized:
  – in that it comprises :
    • a computer (6),
    • an angular position sensor (9) associated with said adjustable horizontal stabilizer (4) ;
    • a first device (14) capable of delivering information representative of the speed of the aircraft engines;
    • a second device (13) capable of delivering information representative of the Mach number ;
    • memory means (10, 11, 12, 25) in which said functions are stored, said memory means receiving the information delivered by said first and second devices (14, 13) and delivering at their output the corresponding values of said functions ;
  – and in that said computer (6) receives information on the position of the focus of the aircraft in addition to the information delivered by said memory means (10 to 12), as well as that delivered by said angular position sensor (9).

6. Application of the process according to one of claims 1 or 2 to monitoring the longitudinal position of the centre of gravity (G) of an aircraft (1) provided with an adjustable horizontal stabilizer (4), said monitoring being effected with respect to at least one limiting position of said centre of gravity, chosen near the focus of said aircraft, characterized in that, at a point of flight for which said aircraft (1) is in equilibrium with its elevator (5) in aerodynamic extension of said adjustable horizontal stabilizer (4) :
  – the deflection (iH) of said adjustable horizontal stabilizer (4) is measured ;
  – the value of a function k(M, N1) of the speed (N1) of the aircraft engines (3) and of the Mach number (M) is determined, this function being representative of the value of deflection (iHlim) of said adjustable horizontal stabilizer (4), in the case of said centre of gravity (G) lying in said limiting position adjacent said focus;
  – said measured deflection (iH) and the value of said function k(M, N1) are compared ; and
  – it is deduced from the comparison whether the centre of gravity lies in front of or to the rear of said limiting position.

7. Process according to Claim 6, characterized in that said function k(M, N1) is a combination of functions each of one sole variable.

8. Process according to one of Claims 6 or 7, characterized in that the respective values of at least two functions k(M, N1) and k'(M, N1) are determined, these functions being respectively representative of the values of deflection of said adjustable horizontal stabilizer, in the case of said centre of gravity lying in limiting positions which are distinct from but close to said focus, the measured deflection is compared with each of said function values and the relative position of said centre of gravity with respect to said limiting positions is deduced from these comparisons.

9. System for carrying out the process of any one of claims 6 to 8, characterized in that it comprises :
  – an angular position sensor (9) associated with said adjustable horizontal stabilizer (4) ;
  – a first device (14) capable of delivering information representative of the speed of the aircraft engines (3) ;
  – a second device (13) capable of delivering information representative of the Mach number ;
  – memory means (15 to 18) in which is stored at least one function k(M, N1), said memory means receiving the information delivered by said first and second devices and delivering at their output the corresponding values of said function ;
  – a comparator (19) capable of comparing the information delivered by said position sensor (9) and the information delivered by said memory means (15-18) ; and
  – an alarm device (20) triggered off by said comparator.

10. System according to claim 9, characterized in that said memory means deliver a plurality of functions k(M, N1) and in that as many comparators (19, 23) are provided as functions.

## Ansprüche

1. Verfahren zum Messen der Längslage des Schwerpunktes (G) eines mit einem regelbaren Höhenleitwerk (4) versehenen Flugzeuges (1), dadurch **gekennzeichnet**, daß an einem Flugpunkt, bei dem sich das Flugzeug (1) mit seinem Tiefenruder (5) in aerodynamischer Verlängerung des regelbaren Höhenleitwerks (4) im Gleichgewicht befindet und wenn der Schwerpunkt in der Nähe des aerodynamischen Mittelpunktes des Flugzeuges liegt, die Lage des Schwerpunktes ausgehend von

- der Lage ($x_F$) des aerodynamischen Mittelpunktes (F) des Flugzeuges (1),
- dem Maß des Ruderausschlags (iH) des regelbaren Höhenleitwerks (4),
- einer ersten Funktion k(M, N1) des Betriebszustandes (N1) der Flugzeugmotoren (3) und der Machzahl (M), wobei diese erste Funktion repräsentativ ist für den Wert des Ruderausschlags (IHRef) des regelbaren Höhenleitwerks (4) für den Fall, wenn der Schwerpunkt (G) im aerodynamischen Mittelpunkt (F) des Flugzeuges liegt, und
- einer zweiten Funktion H(M) der Machzahl berechnet wird, wobei diese zweite Funktion repräsentativ ist für das Abmaß des Ruderausschlags des regelbaren Höhenleitwerks bei einem Abmaß von 1% von der Lage des Schwerpunktes.

2. Verfahren nach Anspruch 1, dadurch **gekennzeichnet**, daß die folgene Gleichung :

$$x_G = x_F + \frac{iH - K(M,N1)}{H(M)}$$

benutzt wird, worin

- $x_G$ die Abszisse der Istlage des Schwerpunktes G gemessen längs der Längsachse (L-L) des Flugzeuges ausgehend vom Bezugsnullpunkt (0) und berechnet auf die mittlere aerodynamische Flügeltiefe des Haupttragwerkes des Flugzeuges,
- $x_F$ die Abszisse der Lage des Schwerpunktes G, für die die Auftriebszahl des Flugzeuges keinen Einfluß auf den Gleichgewichtsausschlag des regelbaren Höhenleitwerks hat, d.h. diejenge Lage, bei der der Schwerpunkt im aerodynamischen Mittelpunkt des gesammten Flugzeuges liegt, wobei diese Abszisse entlang der Längsachse (L-L) des Flugzeuges ausgehend vom Bezugsnullpunkt (0) gemessen und ebenfalls auf die mittlere aerodynamische Flügeltiefe berechnet wird,
- iH das Maß, zum in Betracht kommenden Flugpunkt, des tatsächlichen Ausschlags des regelbaren Höhenleitwerks (4) für das in Gleichgewichtslage befindliche Flugzeug,
- k(M, N1) die erste Funktion des Betriebszustandes (N1) der Motoren (3) des Flugzeuges und der Machzahl (M) zum in Betracht kommenden Flugpunkt und
- H(M) die zweite Funktion der Machzahl zu diesem Flugpunkt ist.

3. Verfahren nach Anspruch 2, dadurch **gekennzeichnet**, daß die Funktion K(M, N1) eine Funktionsverknüpfung jeweils einer einzelnen Variable ist.

4. Verfahren nach Anspruch 3, dadurch **gekennzeichnet**, daß durch die Funktionsverknüpfung ermöglicht wird, die jeweiligen, Einflüsse der Machzahl auf das Flugzeug und auf die Motoren zu trennen.

5. Vorrichtung zum Messen der Längslage des Schwerpunktes eines mit einem regelbaren Höhenleitwerk (4) versehenen Flugzeuges (1) nach dem Verfahren der vorhergehenden Ansprüche 1 oder 2, **gekennzeichnet** durch :

- einen Rechner (6),
- einen dem regelbaren Höhenleitwerk (4) zugeordneten Winkel(lage)sensor (9),
- eine erste Einrichtung (14), durch die für den Betriebszustand der Motoren des Flugzeuges repräsentative Informationen ausgegeben werden können,
- eine zweite Einrichtung (13), durch die für die Machzahl repräsentative Informationen ausgegeben werden können,
- Speicher (10, 11, 12, 25), in denen die Funktionen gespeichert sind und die die von der ersten und der zweiten Einrichtung (14 bzw. 13) ausgegebenen Informationen aufnehmen und an ihrem Ausgang Werte ausgeben, die den Funktionen entsprechen, sowie dadurch **gekennzeichnet**, daß der Rechner (6) Informationen über die Lage des aerodynamischen Mittelpunktes des Flugzeuges und auch von den Speichern (10 bis 12) sowie vom Winkel (lage) sensor (9) ausgegebene Informationen aufnimmt.

6. Anwendung des Verfahrens nach einem der vorhergehenden Ansprüche 1 oder 2 zum Überwachen der Längslage des Schwerpunktes (G) eines mit einem regelbaren Höhenleitwerk (4) versehenen Flugzeuges (1), wobei die Überwachung in bezug auf zumindest eine Grenzlage des in der Nähe des aerodynamischen Mittelpunktes des Flugzeuges gewählten Schwerpunktes durchgeführt wird, dadurch **gekennzeichnet**, daß an einem Flugpunkt, bei dem sich das Flugzeug (1) mit seinem Tiefenruder (5) in aerodynamischer Verlängerung des regelbaren Höhenleitwerks im Gleichgewicht befindet,

- der Ruderausschlag (iH) des regelbaren Höhenleitwerks (4) gemessen wird,
- der Wert einer Funktion k(M, N1) des Betriebszustandes (N1) der Motoren (3) des Flugzeuges sowie die Machzahl (M) bestimmt wird, wobei diese Funktion für den Wert des Ruderausschlags (iHlim) des regelbaren Höhenleitwerks (4) in dem Fall repräsentativ ist, in dem sich der Schwerpunkt (G) in der Grenzlage nahe beim aerodynamischen Mittelpunkt befindet,

– der gemessene Ruderausschlag (iH) und der Wert der Funktion k'(M, N1) sind und

– aus dem Vergleich abgeleitet wird, ob sich der Schwerpunkt vor oder hinter der Grenzlage befindet.

7. Verfahren nach Anspruch 6, dadurch **gekennzeichnet**, daß die Funktion k'(M, N1) eine Funktionsverknüpfung jeweils einer einzigen Variable ist.

8. Verfahren nach einem der vorhergehenden Ansprüche 6 oder 7, dadurch **gekennzeichnet**, daß die diesbezüglichen Werte von zumindest zwei Funktionen k(M, N1) und k'(M, N1) bestimmt werden, wobei diese Fünktionen für die Ausschlagswerte des regelbaren Höhenleitwerks in dem Falle repräsentativ sind, wenn sich der Schwerpunkt in den verschiedenen, jedoch in der Nähe des aerodynamischen Mittelpunktes liegenden Grenzlagen befindet, daß der gemessene Ruderausschlag mit jedem Funktionswert verglichen wird und daß aus diesen Vergleichen die relative Lage des Schwerpunktes gegenüber diesen Grenzlagen abgeleitet wird.

9. Vorrichtung zur Durchführung des Verfahrens einer der vorhergehenden Ansprüche 6 bis 8, **gekennzeichnet** durch

– einen dem regelbaren Höhenleitwerk (4) zugeordneten Winkel(lage)sensor (9),

– eine erste Einrichtung (14), durch die für den Betriebszustand der Motoren (3) des Flugzeuges repräsentative Informationen ausgegeben werden,

– eine zweite Einrichtung (13), durch die für die Machzahl repräsentative Informationen ausgegeben werden,

– Speicher (15 bis 18), in denen zumindest eine Funktion k(M, N1) gespeichert ist und von denen von der ersten und der zweiten Einrichtung ausgegebene Informationen aufgenommen sowie der Funktion entsprechende Werte an ihrem Ausgang ausgegeben werden,

– einen Komparator (19), von dem die vom Winkel(lage)sensor (9) ausgegebenen Informationen und die von den Speichern (15 bis 18) ausgegebenen Informationen verglichen werden können, und

– eine vom Komparator ausgelöste Alarmeinrichtung (20).

10. Vorrichtung nach Anspruch 9, dadurch **gekennzeichnet**, daß die Speicher mehrere Funktionen k(M, N1) ausgeben und daß soviele Komparatoren (19, 23) vorhanden sind, wie es Funktionen gibt.

Fig. 1

## Fig. 2

## Fig. 3

Fig. 4

Fig. 5

Fig. 7

Fig. 6

EP 0 281 428 B1

## Fig. 8

## Fig. 9